# EUROPÄISCHE PATENTSCHRIFT

(11) **EP 1 559 592 B1**
(45) Veröffentlichungstag und Bekanntmachung des Hinweises auf die Patenterteilung: **26.03.2008**
(21) Anmeldenummer: 05450014.5
(22) Anmeldetag: 28.01.2005
(51) Int. Cl.: B60D 1/06, B60D 1/30, B62D 13/02

(54) **Anhänger-Zwangslenkungsmodul**
Forced trailer steering device
Direction forcée pour attache de remorque

(30) Priorität: 30.01.2004 AT 1272004
(43) Veröffentlichungstag der Anmeldung: 03.08.2005
(60) Teilanmeldung: 07023820.9
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- GB-A- 2 348 412
- US-A- 3 436 101
- US-A- 3 957 286
- US-A- 4 306 734
- US-A- 4 832 360
- US-A1- 2002 140 205
- US-B1- 6 283 489

## Beschreibung

Die Erfindung betrifft ein Zwangslenkungsmodul für Anhängerkupplungen mit einem Verbindungselement zur lösbaren Befestigung mit einer Grundplatte od. dgl. der Anhängerkupplung und einem Führungselement zur Verbindung mit einem Führungsgestänge od. dgl. eines Anhängers.

Insbesondere bei mehrachsigen Anhängern erscheint es vorteilhaft, zumindest die Räder einer Achse des Anhängers mitzulenken. Dabei ist es üblich bei einer Anhängerkupplung einen zusätzlichen Anlenkpunkt vorzusehen, über den die Auslenkung des Anhängers im Vergleich zu dem Zugfahrzeug ermittelt wird und die Räder entsprechend gesteuert werden. Dieser zusätzliche Anlenkpunkt wird üblicherweise Zwangslenkung genannt.

Die Position, an der der zusätzliche Anlenkpunkt vorzusehen ist, ist dabei von dem Aufbau des Anhängers bestimmt. Da oftmals mit einer Anhängerkupplung mehrere Anhänger gekoppelt werden können sollen, ist eine Vielzahl an Positionen vorzusehen, an der ein zusätzlicher Anlenkpunkt bereitgestellt werden kann. Nachteilig dabei ist, dass aufgrund der Vielzahl der Möglichkeiten und der baulichen Gegebenheiten für jeden Anhänger eine spezielle Vorrichtung zur Bereitstellung des Anlenkpunktes gebaut wird, wobei gegebenenfalls zusätzlich eine Befestigungsvorrichtung an der Anhängerkupplung vorgesehen werden muss. Ein weiterer Nachteil ist, dass durch die Zwangslenkung oftmals die Verschwenkung des Anhängers gegenüber dem Zugfahrzeug erheblich beeinträchtigt wird, wodurch die Sicherheit des Gespanns herabgesetzt wird.

Aus der GB 2 348 412 A ist eine Kupplung mit einer Kupplungkugel und einer Zwangslenkung bekannt.

Die US 2002/0140205 A1 offenbart eineZwangslenkung mit einer Kupplungkugel.

Die US 3 957 286 A betrifft eine Kupplung mit einer Kupplungkugel und einer Zwangslenkung, welche eine Verbindungsstange umfasst.

Aus der US 4 306 734 A geht eine Kupplung mit einer Kupplungkugel und einer Zwangslenkung umfassend mehrere Verbindungsstangen hervor.

Die US 6 283 489 B1 zeigt eine Kupplung mit einer Kupplungskugel und einer Zwangslenkung.

Aus der US 3 436 101 A ist eine Kupplung mit einer Kupplungkugel und einer Führung bekannt.

Die US 4 832 360 A betrifft eine Kupplung mit einer Kupplungskugel.

Aufgabe der Erfindung ist es, ein Zwangslenkungsmodul anzugeben, das die bekannten Nachteile vermeidet, mit dem ein geringes Bauvolumen der Zwangslenkung sichergestellt werden kann, das einfach aufgebaut ist, für eine große Vielzahl an Anhängern verwendet werden kann, das leicht und schnell montiert und/oder demontiert werden kann und eine hohe Zuverlässigkeit und Sicherheit der Anhängerkupplung ermöglicht.

Erfindungsgemäß wird dies dadurch erreicht, dass das Verbindungselement zumindest ein Seitenelement umfasst, dass ein Trägerelement zur Aufnahme des Führungselementes vorgesehen ist und dass Vorrichtungen zum Befestigen des Trägerelementes in zumindest zwei unterscheidbaren Positionen mit dem Seitenelement vorgesehen sind.

Dadurch ergibt sich der Vorteil, dass eine Mehrzahl an Positionen für das Führungselement in Bezug auf die Anhängerkupplung mit wenigen Bauteilen bereitgestellt werden kann, wobei an der Anhängerkupplung nur Befestigungen für das Verbindungselement vorgesehen werden müssen. Ein weiterer Vorteil ist, dass das Verbindungselement außerhalb des Bereichs des Kupplungsmittels der Anhängerkupplung montiert werden kann, wodurch ein weitgehend ungestörter Betrieb der Anhängerkupplung sichergestellt werden kann. Weiters können mit dem erfindungsgemäßen Zwangslenkungsmodul mit einer sehr geringen Anzahl unterschiedlicher Teile eine große Vielzahl an Anlenkpunkten für die Zwangslenkung bereitgestellt werden.

In Weiterbildung der Erfindung kann vorgesehen sein, dass die Befestigung des Trägerelementes in zumindest drei unterscheidbaren Positionen mit dem Seitenelement vorgesehen ist. Dadurch kann für die meisten gängigen Anhänger ein Anlenkpunkt im vorgeschriebenen Bereich bereitgestellt werden.

Gemäß einer anderen Ausführungsform der Erfindung kann vorgesehen sein, dass das Führungselement in einer ersten Position in eine erste Richtung weist, in einer zweiten Position in eine zweite, zu der ersten Richtung entgegengesetzten Richtung weist und in einer dritten Position zu der ersten Position um einen vorgebbaren Winkel verdreht angeordnet ist. Mit diesen Positionen kann für die meisten gängigen Anhänger ein Anlenkpunkt im jeweils vorgeschriebenen Bereich bereitgestellt werden.

In diesem Zusammenhang kann in weiterer Ausgestaltung der Erfindung vorgesehen sein, dass der Winkel im Bereich von etwa 10° bis etwa 30°, insbesondere im Bereich von etwa 15° bis etwa 25°, ist. Durch diese Wahl des Winkels kann auf einfache Weise sichergestellt werden, dass ein großer Verschwenkwinkel des Anhängers erreicht werden kann, wobei die mit der Anhängerkupplung und die mit dem Führungselement verbundenen Teile des Anhängers in unterschiedlichen Ebenen bewegen, wodurch gegenseitige störende Einflüsse weitgehend vermieden werden können.

In weiterer Ausbildung der Erfindung kann vorgesehen sein, dass das Trägerelement durch Wenden von der ersten Position in die zweite Position verbringbar ist. Durch diese Ausbildung kann für alle Positionen dasselbe Trägerelement verwendet werden, wodurch die Anzahl der benötigten Teile besonders gering gehalten werden kann.

Gemäß einer anderen Ausgestaltung der Erfindung kann vorgesehen sein, dass das Trägerelement Durchgangsbohrungen aufweist und mit dem Seitenelement mittels von den Durchgangsbohrungen aufgenommenen Befestigungsmitteln, insbesondere Schrauben, verbindbar ist. Durch diese Ausführung kann besonders einfach ein wendbares Trägerelement ausgebildet werden.

In Weiterbildung der Erfindung kann vorgesehen sein, dass das Seitenelement eine Mehrzahl an Gewindebohrungen zur Verbindung mit dem Trägerelement in den unterscheidbaren Positionen aufweist. Durch die Mehrzahl an Gewindebohrungen kann einfach eine Vielzahl an möglichen Positionen erreicht werden. Weiters können gegebenenfalls durch Hinzufügen weiterer Gewindebohrungen einfach weitere Positionen bereitgestellt werden.

Gemäß einer weiteren Ausbildung der Erfindung kann vorgesehen sein, dass das Verbindungselement eine Befestigungsvorrichtung umfasst, wobei die Befestigungsvorrichtung symmetrisch hinsichtlich einer Rotation des Verbindungselementes um im wesentlichen 180° ist, wobei das Seitenelement bei der Rotation auf eine gegenüberliegende Seite der Anhängerkupplung bringbar ist. Dadurch kann mit dem erfindungsgemäßen Zwangslenkungsmodul wahlweise an beiden Seiten der Anhängerkupplung ein Anlenkpunkt bereitgestellt werden.

Gemäß einer anderen Ausführungsform der Erfindung kann vorgesehen sein, dass zwei gegenüberliegend angeordnete Seitenelemente vorgesehen sind, wodurch auch gleichzeitig an beiden Seiten der Anhängerkupplung jeweils ein Anlenkpunkt bereitgestellt werden kann.

In weitere Ausgestaltung der Erfindung kann vorgesehen sein, dass das Seitenelement mit dem Verbindungselement unlösbar verbunden, insbesondere verschweißt, ist. Dies stellt eine besonders einfache, robuste und gut belastbare Ausgestaltung dar.

In Weiterführung der Erfindung kann vorgesehen sein, dass das Führungselement als Kupplungskugel ausgebildet ist. Mit der Kupplungskugel kann das Spiel bei der Übertragung der Bewegung auf den Anhänger gering gehalten werden, wodurch eine besonders gute Lenkwirkung erzielt werden kann.

Gemäß einer weiteren Ausführungsform der Erfindung kann vorgesehen sein, dass das Führungselement wenigstens eine Schmiervorrichtung, insbesondere eine Schmierbohrung aufweist. Durch die Schmiervorrichtung kann eine hohe Lebensdauer des erfindungsgemäßen Zwangslenkungsmoduls erreicht werden.

Die Erfindung betrifft weiters eine Kupplungsvorrichtung mit einem oben angeführten Zwangslenkungsmodul. Durch das Vorsehen eines erfindungsgemäßen Zwangslenkungsmoduls können dessen Vorteile für die gesamte Kupplungsvorrichtung bereitgestellt werden.

In Weiterbildung der Erfindung kann vorgesehen sein, dass die Kupplungsvorrichtung eine Zugöse für eine eine Kupplungskugel aufweisende Zwangslenkung, insbesondere einem oben beschriebenen Zwangslenkungsmodul, mit einem Zugösenschaft und einer Kugel-Innenfläche, wobei die Kugel-Innenfläche eine Aussparung aufweist, umfasst.

Zwangslenkungen werden zusätzlich zu einer Anhängerkupplung eingesetzt, wodurch das Bauvolumen im Vergleich zu einer Anhängerkupplung ohne Zwangslenkung jedenfalls vergrößert ist. Nachteilig dabei ist, dass durch das vergrößerte Bauvolumen oftmals die Verschwenkbarkeit eines Anhängers gegenüber einen Zugfahrzeug vermindert wird, wodurch die Sicherheit des Gespanns verringert wird.

Dadurch, dass ein im Wesentlichen stiftförmiges Betätigungselement, welches einen der Kugel-Innenfläche entsprechenden Eingriffsbereich aufweist, in die Aussparung bringbar ist und dass die Längsachse des Betätigungselementes außerhalb der durch die Längsachse des Zugösenschaftes und dem Mittelpunkt der Kugel-Innenfläche gebildeten Symmetrieebene liegt, wird erreicht, dass bei der Zugöse die bekannten Nachteile vermieden werden, ein geringes Bauvolumen der Zwangslenknng sicherstellt werden kann, wobei die Zugöse einfach aufgebaut ist, eine hohe Zuverlässigkeit und Sicherheit der Anhängerkupplung ermöglicht und auch hohen Belastungen standhält.

Dadurch ergibt sich der Vorteil, dass kein zusätzliches Bauteil für das Halten der Zugöse auf der Kupplungskugel erforderlich ist, wodurch die Baugröße der Zwangslenkung besonders gering gehalten werden kann. Durch diese Form der Befestigung der Zugöse auf der Kupplungskugel können die bei einer Zwangslenkung üblicherweise geringen Stützlasten aufgenommen werden, wodurch ein Abheben der Zugöse sicher vermieden wird. Durch die Anordnung des Betätigungselementes können auch die erforderlichen Kräfte in Längsrichtung des Zugösenschaftes sicher übertragen werden, wodurch eine hohe Sicherheit und

Lebensdauer der Zwangslenkung erreicht wird. Eine formschlüssige Verbindung zwischen dem Betätigungselement und der Kupplungskugel kann erreicht werden, indem das Betätigungselement einen der Kugel-Innenfläche entsprechenden Eingriffsbereich aufweist.

In Weiterbildung der Erfindung kann vorgesehen sein, dass die Längsachse des Betätigungselementes mit der Symmetrieebene einen Winkel von zumindest 10°, vorzugsweise von zumindest 45°, insbesondere von im Wesentlichen 90°, einschließt. Durch diese verschwenkte Anordnung des Betätigungselementes kann sichergestellt werden, dass eine hohe Belastbarkeit des Zugösenschaftes gegeben ist, die durch das Betätigungselement nur unwesentlich beeinträchtigt wird.

In diesem Zusammenhang kann in Weiterführung der Erfindung vorgesehen sein, dass die Aussparung außerhalb der Verlängerung des Zugöseschaftes bis zur Mitte der Kugel-Innenfläche angeordnet ist, wodurch eine besonders hohe Belastbarkeit der Zugöse in Längsrichtung des Zugösenschaftes bei einem vorgegebenen Querschnitt erreicht werden kann.

In weiterer Ausgestaltung der Erfindung kann vorgesehen sein, dass die gesamte von der Aussparung unterscheidbare Kugel-Innenfläche als Auflagerfläche ausgebildet ist. Dadurch können die auftretenden Spannungen gering gehalten werden und eine lange Lebensdauer, Zuverlässigkeit und Sicherheit der Zugöse sichergestellt werden.

Die Erfindung wird unter Bezugnahme auf die beigeschlossenen Zeichnungen, in welchen Ausführungsformen dargestellt sind, näher beschrieben. Dabei zeigt:
Fig. 1 eine Explosionsdarstellung eines erfindungsgemäßen Zwangslenkungsmoduls im Schrägriss, wobei das Führungselement in einer ersten Position ist;
Fig. 2 eine Schrägansicht auf eine Anhängerkupplung und das Zwangslenkungsmodul nach Fig. 1, wobei das Führungselement in einer dritten Position ist.
Fig. 3 eine Schrägansicht auf die Anordnung nach Fig. 2, wobei das Führungselement in einer zweiten Position ist;
Fig. 4 und 5 jeweils eine Schrägansicht einer Anordnung nach Fig. 2, wobei das Seitenelement an der gegenüberliegenden Seite der Anhängerkupplung angeordnet ist;
Fig. 6 eine Schrägansicht auf eine Anhängerkupplung und eine weitere Ausführungsform des erfindungsgemäßen Zwangslenkungsmoduls mit zwei Seitenelementen;
Fig. 7 eine Schrägansicht auf eine Zugöse in Zusammenwirkung mit dem Führungselement des erfindungsgemäßen Zwangslenkungsmoduls gemäß den Fig. 1 bis 6;
Fig. 8 eine Seitenansicht der Zugöse nach Fig. 7;
Fig. 9 eine Schnittansicht der Zugöse nach Fig. 7 gemäß der Linie BB in Fig. 10;
Fig. 10 eine Draufsicht auf die Zugöse nach Fig. 7;
Fig. 11 das Detail A der Zugöse nach Fig. 7;
Fig. 12 bis 16 eine Ausführungsform einer erfindungsgemäßen Zugöse zum Zusammenwirken mit dem Führungselement des erfindungsgemäßen Zwangslenkungsmoduls;
Fig. 17 bis 21 eine andere Ausführungsform einer erfindungsgemäßen Zugöse; und
Fig. 22 bis 24 eine weitere Ausführungsform einer erfindungsgemäßen Zugöse.

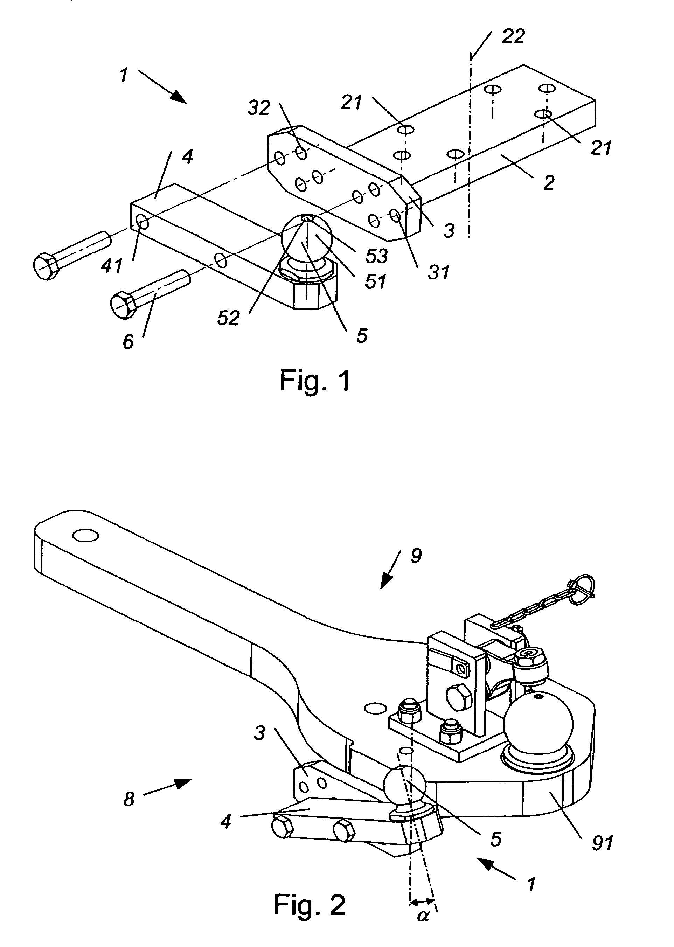

In Fig. 1 ist eine Explosionsdarstellung einer Ausführungsform eines erfindungsgemäßen Zwangslenkungsmoduls 1 für Anhängerkupplungen 9 mit einem Verbindungselement 2 und einem Führungselement 5 dargestellt, wobei das Verbindungselement 2 ein Seitenelement 3 umfasst, ein Trägerelement 4 zur Aufnahme des Führungselementes 5 vorgesehen ist und

Vorrichtungen zum Befestigen 31 des Trägerelementes 4 in zumindest zwei unterscheidbaren Positionen mit dem Seitenelement 3 vorgesehen sind.

Das Verbindungselement 2 ist zur lösbaren Befestigung mit einer Grundplatte 91 od. dgl. der Anhängerkupplung 9 vorgesehen. Wie aus den Fig. 2 bis 6 ersichtlich, kann das Verbindungselement 2 vorzugsweise - in Betriebslage der Anhängerkupplung 9 gesehen - unterhalb der Grundplatte 91 od. dgl. angeordnet sein. Eine einfache lösbare Befestigung kann mittels Schrauben erreicht werden.

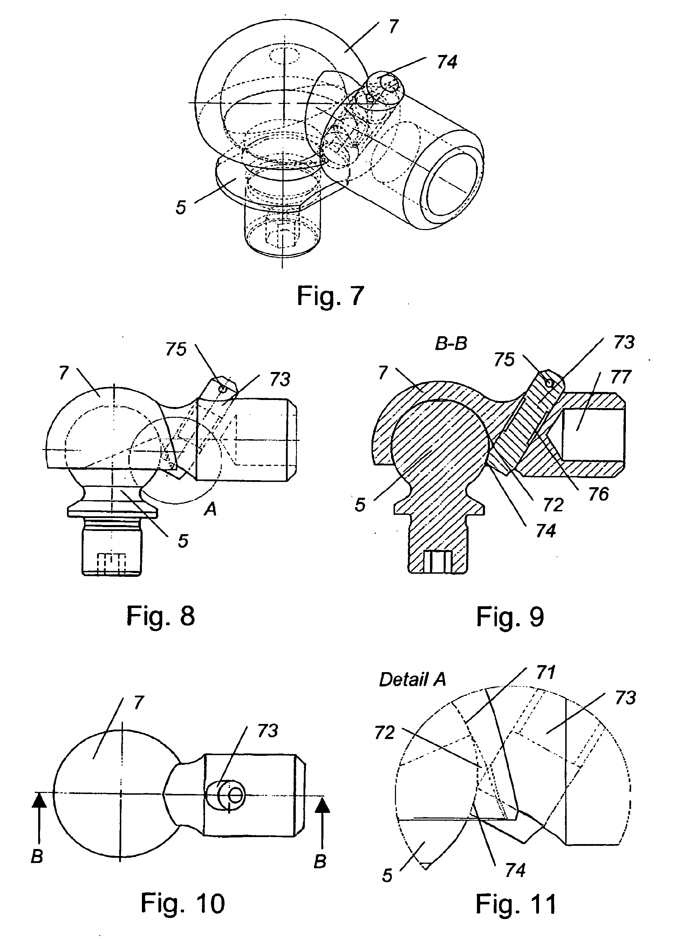

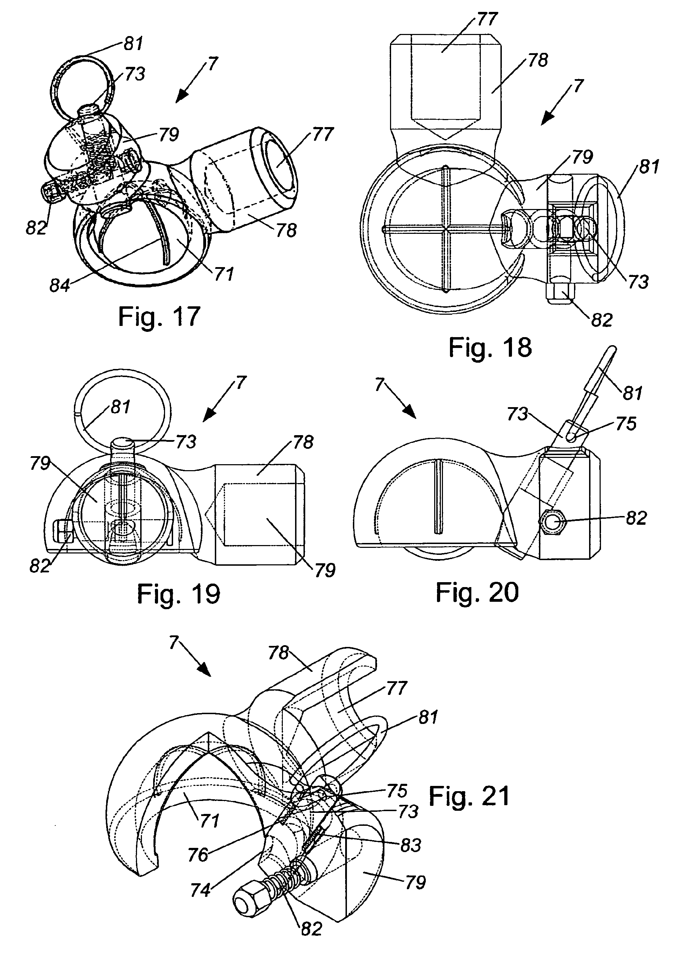

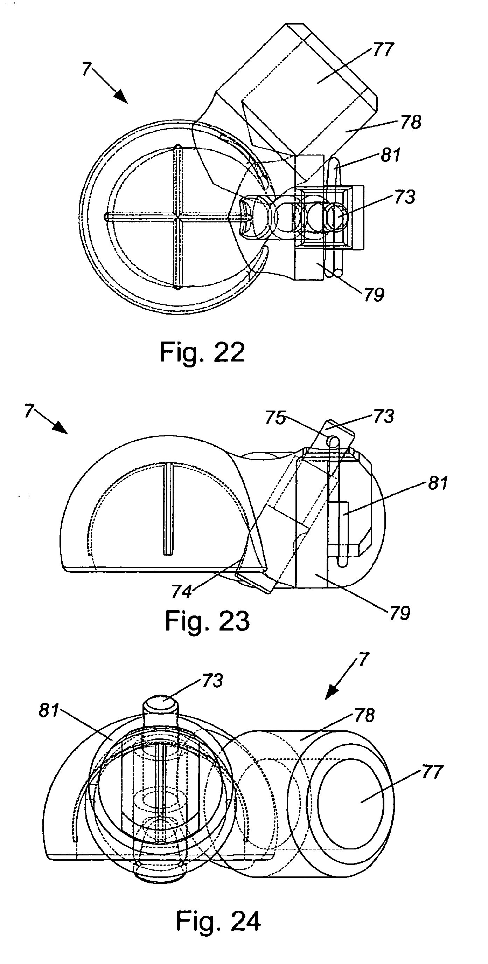

Mit dem Führungselement 5 kann ein Führungsgestänge od. dgl. eines Anhängers verbunden werden. Dabei kann das Führungsgestänge eine Zugöse 7 gemäß den Fig. 7 bis 24 umfassen.

Mit der erfindungsgemäßen Zwangslenkung können zumindest ein Teil der Räder des Anhängers abhängig von dem Verschwenkwinkel des Anhängers relativ zu einem Zugfahrzeug eingestellt werden, wodurch das Fahrverhalten des Gespanns in Kurven verbessert werden kann.

Bei dem erfindungsgemäßen Zwangslenkungsmodul 1 ist vorgesehen, dass das Trägerelement 4 in mehreren unterscheidbaren Positionen mit dem Seitenelement 3 verbindbar ist, wobei zumindest zwei, vorzugsweise wenigstens drei unterscheidbare Positionen vorgesehen sind.

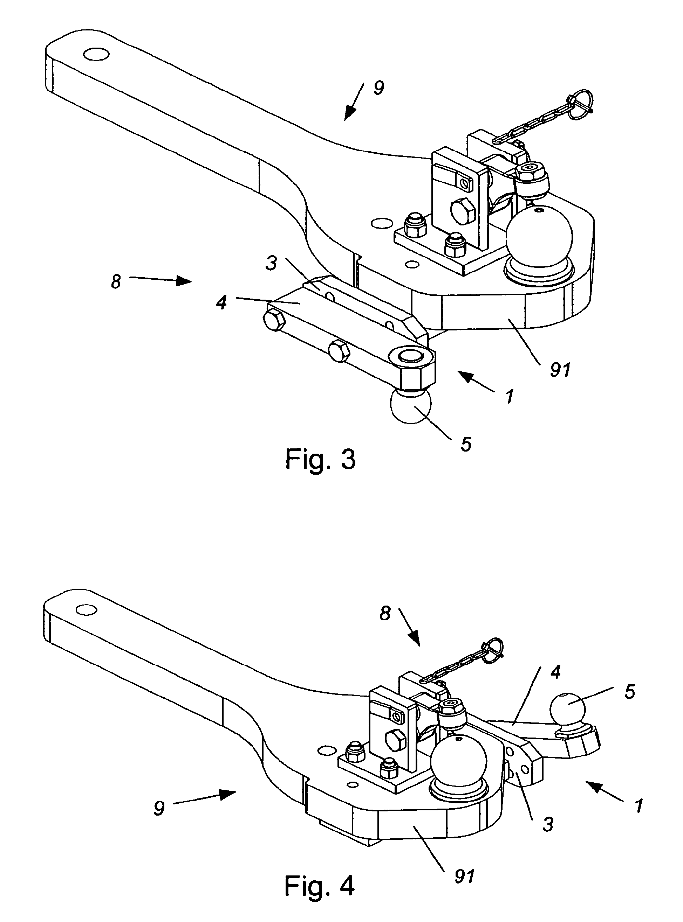

In der Fig. 1 ist eine erste Position, in Fig. 3 eine zweite Position und in Fig. 2 eine dritte Position des Trägerelementes 4 dargestellt. Dabei weist das Führungselement 5 in der ersten Position in eine erste Richtung, in der zweiten Position in eine zweite Richtung, wobei die zweite Richtung entgegengesetzt zu der ersten Richtung ist, und ist in der dritten Position zu der ersten Position um einen vorgebbaren Winkel α verdreht angeordnet.

Es hat sich als vorteilhaft gezeigt, den Winkel α im Bereich von etwa 10° bis etwa 30°, insbesondere im Bereich von etwa 15° bis 25°, vorzugeben.

Die Verschwenkbarkeit des Anhängers gegenüber dem Zugfahrzeug soll durch die erfindungsgemäße Zwangslenkung möglichst wenig eingeschränkt werden. Dies kann dadurch erreicht werden, dass das Zwangslenkungsmodul 1 und/oder das mit dem Zwangslenkungsmodul 1 verbundene Führungsgestänge des Anhängers außerhalb der Ebene der Anhängerkupplung 9 und des mit dieser verbundenen Zuggestänges des Anhängers angeordnet ist. Dies kann insbesondere durch die Anordnung des Führungselementes 5 in der zweiten oder der dritten Position erreicht werden.

Die Anzahl der erforderlichen Bauteile kann besonders gering gehalten werden, wenn das Trägerelement 4 durch Wenden von der ersten Position in die zweite Position verbringbar ist und in beiden Positionen mit dem Seitenelement 3 verbindbar ist.

Dies kann auf einfache Weise erreicht werden, wenn das Trägerelement 4 Durchgangsbohrungen 41 aufweist und mit dem Seitenelement 3 mittels von den Durchgangsbohrungen 41 aufgenommenen Befestigungsmitteln 6 verbindbar ist. Dabei können die Befestigungsmittel 6 insbesondere Schrauben sein. Bei der gezeigten Ausführungsform sind die Befestigungsmittel 6 leicht zugänglich, wodurch ein schnelles Verbringen des Trägerelementes 4 von einer Position in eine andere Position ermöglicht wird.

Die Verbindung mit dem Trägerelement 4 in unterscheidbaren Positionen kann dabei durch das Vorsehen einer Mehrzahl an Gewindebohrungen 32 im Seitenelement 3 erreicht werden.

Sofern für eine konkrete Anwendung das Führungselement 5 nicht in die für den Anlenkpunkt vorgegebene Sollposition gebracht werden kann, können durch das Anbringen weiterer Gewindebohrungen 32 im Seitenelement 3 weitere mögliche Positionen bereitgestellt werden, wobei diese auch von einem Endbenutzer einfach angebracht werden können.

Durch die Verwendung von längeren Befestigungsmitteln 6 und Zwischenelementen zwischen dem Seitenelement 3 und dem Trägerelement 4 können auf einfache Weise auch unterschiedliche Abstände des Führungselementes 5 von der Anhängerkupplung 9 erreichen.

Die Anzahl der bereitstellbaren Anlenkpunkte kann weiter erhöht werden, wenn das Verbindungselement 2 eine Befestigungsvorrichtung 21 umfasst, wobei die Befestigungsvorrichtung 21 symmetrisch hinsichtlich einer Rotation des Verbindungselementes 2 um im wesentlichen 180° ist, wobei das Seitenelement 3 bei der Rotation auf eine gegenüberliegende Seite der Anhängerkupplung 9 gebracht wird. Dabei wird das Verbindungselement 2 um die Achse 22 in Fig. 1 gedreht.

Die Befestigungsvorrichtung 21 dient zur lösbaren Befestigung mit der Anhängerkupplung 9, wobei die Befestigung - in Betriebslage der Anhängerkupplung 9 gesehen - von unten erfolgen kann, wodurch die Funktion der Anhängerkupplung 9 nicht beeinträchtigt wird. Bei einer Kupplungsvorrichtung 8 kann sichergestellt werden, dass die Befestigungsmittel 6 und die Befestigungsvorrichtung 21 besonders einfach zugänglich ist.

Durch Rotation um die Achse 22 können mit einer einzigen Ausführungsform der erfindungsgemäßen Zwangslenkung alle in den Fig. 1 bis 5 dargestellten Positionen des Führungselementes 5 bereitgestellt werden.

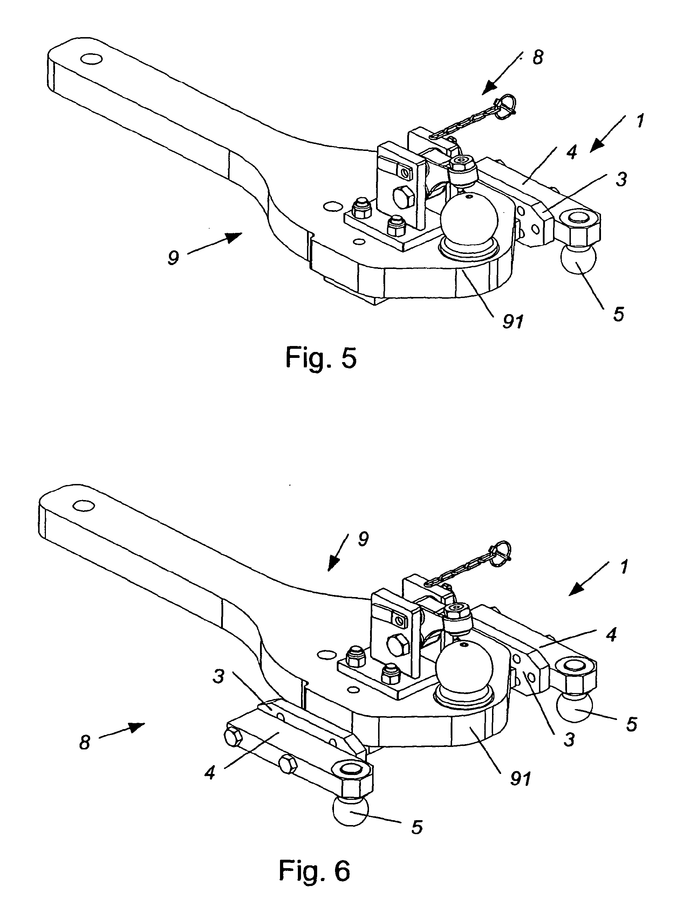

In Fig. 6 ist eine weitere Ausführungsform des erfindungsgemäßen Zwangslenkungsmoduls 1 dargestellt, bei dem zwei gegenüberliegend angeordnete Seitenelemente 3 vorgesehen sind. Mit dieser Ausführungsform können auch zwei Anlenkungspunkte gleichzeitig bereitgestellt werden.

Das Seitenelement 3 kann lösbar oder unlösbar mit dem Verbindungselement 2 verbunden sein. Besonders günstig erscheint eine unlösbare Verbindung, welche insbesondere verschweißt sein kann. Dabei wird die Außenfläche des Seitenelementes 3 für die Verbindung mit dem Verbindungselement 2 nicht benötigt, wodurch die Anzahl und Anordnung der Gewindebohrungen 32 an dem Seitenelement 3 durch die Verbindung des Seitenelementes 3 mit dem Verbindungselement 2 nicht beeinträchtigt wird.

Die in den Fig. 1 bis 6 dargestellten Anlenkungspunkte können mit lediglich drei unterschiedlichen Bauteilen bereitgestellt werden, welche jeweils einen einfachen Aufbau aufweisen. Dadurch können Herstellungs- und Lagerkosten gering gehalten werden.

Wird das Führungselement 5 als Kupplungskugel 51 ausgebildet, so kann eine Zwangslenkung mit einem nur geringen Spiel erreicht werden, wodurch die Zuverlässigkeit und Sicherheit der Zwangslenkung erhöht wird. Bei anderen Ausführungsformen kann das Führungselement 5 auch als Haken, Bolzen od. dgl. ausgebildet sein.

Eine besonders hohe Lebensdauer des Führungselementes 5 kann erreicht werden, wenn das Führungselement 5 wenigstens eine Schmiervorrichtung 52, insbesondere eine Schmierbohrung 53 aufweist.

Ist das Führungselement 5 als Kupplungskugel 51 ausgebildet, so umfasst das Führungsgestänge des Anhängers eine Zugöse 7. Um einen sicheren Halt der Zugöse 7 auf der Kupplungskugel 51 sicherzustellen, kann auf dem Trägerelement 4 ein Niederhalter befestigt sein.

Die erforderliche Bauhöhe kann besonders gering gehalten werden, wenn eine Zugöse 7 gemäß den Fig. 7 bis 24 verwendet wird. Die Zugöse 7 weist eine Kugel-Innenfläche 71 auf, wobei die Kugel-Innenfläche 71 eine Aussparung 72 aufweist und ein Betätigungselement 73 in die Aussparung 72 bringbar ist. Durch das Betätigungselement 73 kann ein sicherer Halt der Zugöse 7 auf dem als Kupplungskugel 51 ausgebildeten Führungselement 5 sichergestellt werden. Dabei kann insbesondere ausgenützt werden, dass bei einer Zwangslenkung üblicherweise nur geringe Stützlasten zu übertragen sind. Die Zugöse 7 weist einen Zugösenschaft 78 auf. Mit dem Zugösenschaft 78 kann ein Lenkungsgestänge eines Anhängers verbunden sein.

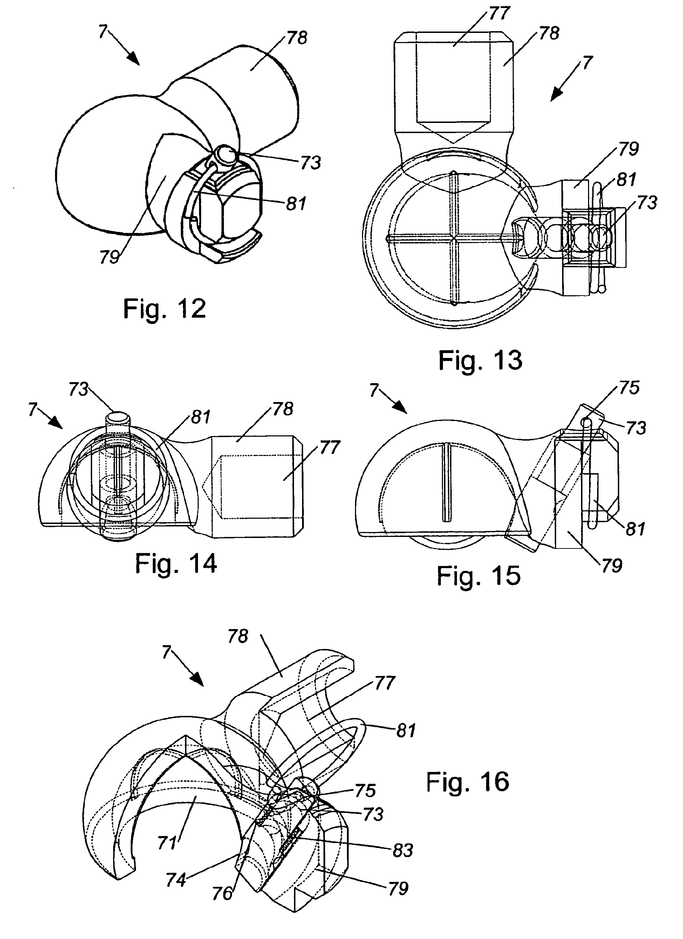

Die Zugöse, wie sie in den Fig. 12 bis 24 gezeigt ist, weist ein im Wesentlichen stiftförmiges Betätigungselement 73 auf, welches einen der Kugel-Innenfläche 71 entsprechenden Eingriffsbereich 74 aufweist, in die Aussparungen 72 bringbar ist und wobei die Längsachse des Betätigungselementes 73 außerhalb der durch die Längsachse des Zugösenschaftes 78 und dem Mittelpunkt der Kugel-Innenfläche 71 gebildeten Symmetrieebene liegt.

Die Symmetrieebene bildet - in Gebrauchslage der Zugöse 7 gesehen - üblicherweise eine lotrechte Ebene aus, die neben dem Mittelpunkt der Kugel-Innenfläche 71 auch den Scheitelpunkt der Kugel-Innenfläche 71 umfasst. Die Symmetrieebene ist auch eine Symmetrieebene einer idealen Zugöse 7 ohne Betätigungselement 73. In dem obigen Sinne kann die Symmetrieebene auch bei einer Ausführungsform einer Zugöse 7 eindeutig bestimmt werden, bei der der Mittelpunkt der Kugel-Innenfläche 71 mit der Längsachse des Zugösenschaftes 78 zusammenfällt.

Durch die verschwenkte Anordnung des Betätigungselementes 73 gegenüber der Symmetrieebene kann sichergestellt werden, dass hohe Kräfte in Längsrichtung des Zugösenschaftes 78 übertragen werden können, wobei das Betätigungselement 73 einen nur geringen störenden Einfluss aufweist. Bei der Verwendung mit der Zwangslenkung ist das Betätigungselement 73 aus der Kraftrichtung der Lenkkräfte, welche über den Zugösenschaft 78 übertragen werden, geschwenkt.

Es kann vorgesehen sein, dass die Längsachse des Betätigungselementes 73 mit der Symmetrieebene einen Winkel von zumindest 10°, vorzugsweise von zumindest 45°, insbesondere von im Wesentlichen 90°, einschließt. Es hat sich gezeigt, dass bereits bei einem Winkel von 10° eine erhöhte Belastbarkeit der Zugösenschaftes 78 erreicht werden kann. Bei 90° ist eine besonders gute Entkoppelung gegeben. Bei 45° erhält man im Vergleich zu 90° eine kompaktere Bauform der Zugöse 7.

Das Betätigungselement 73 kann beidseitig der Symmetrieebene angeordnet sein. Bei anderen Ausführungen können auch zwei Betätigungselemente 73 vorgesehen sein, wodurch eine erhöhte Stützlast von der Zugöse 7 aufgenommen werden kann. Das Betätigungselement 73 kann in einem an die Zugöse 7 angeformten Fortsatz 79 geführt sein.

Es kann vorgesehen sein, dass die Aussparung 72 außerhalb der Verlängerung des Zugösenschaftes 78 bis zur Mitte der Kugel-Innenfläche 71 angeordnet ist. Durch diese Ausbildung wird eine Beeinflussung des Spannungsverlaufes in dem Zugösenschaft 78 durch das Betätigungselement 73 weitgehend vermieden.

Die Aussparung 72 kann im wesentlichen keilförmig sein. Weiters kann das Betätigungselement 73 einen der Kugel-Innenfläche 71 entsprechenden Eingriffsbereich 74 aufweisen. Weiters erscheint vorteilhaft, wenn die gesamte von der Aussparung 72 unterscheidbare Kugel-Innenfläche 71 als Auflagerfläche ausgebildet ist.

Die von der Kugel-Innenfläche 71 bereitgestellte Auflagerfläche kann dabei im wesentlichen halbkugelförmig sein. Der Eingriffsbereich 74 des Betätigungselementes 73 ist im gekuppelten Zustand ebenfalls im Eingriff mit der Kupplungskugel 51 und bildet eine weitere Auflagerfläche aus. Durch die Ausbildung entsprechend der Kugel-Innenfläche 71 kann diese weitere Auflagerfläche besonders groß gewählt werden, wodurch die auftretenden Spannungen gering gehalten werden können.

Die Kugel-Innenfläche 71 kann Schmier-Rillen 84 aufweisen, wodurch eine gute Schmierung und ein sicheres Gleiten der Zugöse 7 auf der Kupplungskugel 51 sichergestellt werden kann.

Während des Kuppelvorgangs kann das Betätigungselement 73 aus dem Eingriff mit dem Führungselement 5 gebracht werden. Dabei kann ein Zugelement, insbesondere ein Ring 81, eine Kette od. dgl., mittels einer Querbohrung 75 mit dem Betätigungselement 73 verbunden werden. Ein sicherer Halt des Betätigungselementes 73 in der gekuppelten Stellung kann durch das Vorsehen eines elastischen Elementes 83, insbesondere einer Feder od. dgl., erreicht werden, wobei das elastische Element 83 beispielsweise in einem Lagerraum 76 angeordnet werden kann. Zur Sicherung des Betätigungselementes 73 in der gekuppelten Stellung kann vorgesehen sein, dass der Ring 81 an einer Nase des Fortsatzes 79 eingerastet werden kann. Dies ist bei den Ausführungsformen gemäß den Fig. 12 bis 16 und 22 bis 24 der Fall. Bei anderen Ausführungsformen kann das Betätigungselement 73 auch mittels eines Stiftes 82, der seitlich einschiebbar und fixierbar ist, gesichert werden.

Weiters weist die Zugöse 7 eine Aufnahme 77 für das Führungsgestänge auf. Eine besonders einfache Ausgestaltung der Zugöse 7 kann mit einem im Wesentlichen zylindrischen Betätigungselement 73 erreicht werden.

Durch die Ausbildung einer Führungsfeder kann auf einfache Weise eine Verdrehsicherung des Betätigungselementes 73 ausgebildet werden. Bei anderen Ausführungsformen kann eine Verdrehsicherung beispielsweise auch durch die Wahl eines elliptischen und/oder prismenförmigen Querschnitts erreicht werden.

Durch den Einsatz des erfindungsgemäßen Zwangslenkungsmoduls 1 und der erfindungsgemäßen Zugöse 7 kann das benötigte Bauvolumen für die Zwangslenkung besonders gering gehalten werden.

## Patentansprüche

1. Zwangslenkungsmodul (1) für Anhängerkupplungen (9), wobei das Zwangslenkmodul ein Verbindungselement (2) zur lösbaren Befestigung mit einer Grundplatte (91) od. dgl. der Anhängerkupplung (9) und ein Führungselement (5) zur Verbindung mit einem Führungsgestänge od. dgl. eines Anhängers aufweist, **dadurch gekennzeichnet, dass** das Verbindungselement (2) zumindest ein Seitenelement (3) umfasst, dass ein Trägerelement (4) zur Aufnahme des Führungselementes (5) vorgesehen ist und dass Vorrichtungen zum Befestigen (31) des Trägerelementes (4) in zumindest zwei unterscheidbaren Positionen mit dem Seitenelement (3) vorgesehen sind.

2. Zwangslenkungsmodul (1) nach Anspruch 1, **dadurch gekennzeichnet, dass** die Befestigung des Trägerelementes (4) in zumindest drei unterscheidbaren Positionen mit dem Seitenelement (3) vorgesehen ist.

3. Zwangslenkungsmodul (1) nach Anspruch 2, **dadurch gekennzeichnet, dass** das Führungselement (5) in einer ersten Position in eine erste Richtung weist, in einer zweiten Position in eine zweite, zu der ersten Richtung entgegengesetzten Richtung weist und in einer dritten Position zu der ersten Position um einen vorgebbaren Winkel (α) verdreht angeordnet ist.

4. Zwangslenkungsmodul (1) nach Anspruch 3, **dadurch gekennzeichnet, dass** der Winkel (α) im Bereich von etwa 10° bis etwa 30°, insbesondere im Bereich von etwa 15° bis etwa 25°, ist.

5. Zwangslenkungsmodul (1) nach Anspruch 3 oder 4, **dadurch gekennzeichnet, dass** das Trägerelement (4) durch Wenden von der ersten Position in die zweite Position verbringbar ist.

6. Zwangslenkungsmodul (1) nach einem der Ansprüche 1 bis 5, **dadurch gekennzeichnet, dass** das Trägerelement (4) Durchgangsbohrungen (41) aufweist und mit dem Seitenelement (3) mittels von den Durchgangsbohrungen (41) aufgenommenen Befestigungsmitteln, insbesondere Schrauben, verbindbar ist.

7. Zwangslenkungsmodul (1) nach einem der Ansprüche 1 bis 6, **dadurch gekennzeichnet, dass** das Seitenelement (3) eine Mehrzahl an Gewindebohrungen (32) zur Verbindung mit dem Trägerelement (4) in den unterscheidbaren Positionen aufweist.

8. Zwangslenkungsmodul (1) nach einem der Ansprüche 1 bis 7, **dadurch gekennzeichnet, dass** das Verbindungselement (2) eine Befestigungsvorrichtung (21) umfasst, wobei die Befestigungsvorrichtung (21) symmetrisch hinsichtlich einer Rotation des Verbindungselementes (2) um im wesentlichen 180° ist, wobei das Seitenelement (3) bei der Rotation auf eine gegenüberliegende Seite der Anhängerkupplung (9) bringbar ist.

9. Zwangslenkungsmodul (1) nach einem der Ansprüche 1 bis 8, **dadurch gekennzeichnet, dass** zwei gegenüberliegend angeordnete Seitenelemente (3) vorgesehen sind.

10. Zwangslenkungsmodul (1) nach einem der Ansprüche 1 bis 9, **dadurch gekennzeichnet, dass** das Seitenelement (3) mit dem Verbindungselement (2) unlösbar verbunden, insbesondere verschweißt, ist.

11. Zwangslenkungsmodul (1) nach einem der Ansprüche 1 bis 10, **dadurch gekennzeichnet, dass** das Führungselement (5) als Kupplungskugel (51) ausgebildet ist.

12. Zwangslenkungsmodul (1) nach einem der Ansprüche 1 bis 11, **dadurch gekennzeichnet, dass** das Führungselement (5) wenigstens eine Schmiervorrichtung (52), insbesondere eine Schmierbohrung (53) aufweist.

13. Kupplungsvorrichtung (8) mit einem Zwangslenkungsmodul (1) nach einem der Ansprüche 1 bis 12.

14. Kupplungsvorrichtung nach Anspruch 13 mit einer Zugöse (7) für eine eine Kupplungskugel (51) aufweisende Zwangslenkung mit einem Zugösenschaft (78) und einer Kugel-Innenfläche (71), wobei die Kugel-Innenfläche (71) eine Aussparung (72) aufweist **dadurch gekennzeichnet, dass** ein im Wesentlichen stiftförmiges Betätigungselement (73), welches einen der Kugel-Innenfläche (71) entsprechenden Eingriffsbereich (74) aufweist, in die Aussparung (72) bringbar ist und dass die Längsachse des Betätigungselementes (73) außerhalb der durch die Längsachse des Zugösenschaftes (78) und dem Mittelpunkt der Kugel-Innenfläche (71) gebildeten Symmetrieebene liegt.

15. Kupplungsvorrichtung nach Anspruch 14, **dadurch gekennzeichnet, dass** die Längsachse des Betätigungselementes (73) mit der Symmetrieebene einen Winkel von zumindest 10°, vorzugsweise von zumindest 45°, insbesondere von im Wesentlichen 90°, einschließt.

16. Kupplungsvorrichtung nach Anspruch 14 oder 15, **dadurch gekennzeichnet, dass** die Aussparung (72) außerhalb der Verlängerung des Zugöseschaftes (78) bis zur Mitte der Kugel-Innenfläche (71) angeordnet ist.

17. Kupplungs vorrichtung nach einem der Ansprüche 14 bis 16, **dadurch gekennzeichnet, dass** die gesamte von der Aussparung (72) unterscheidbare Kugel-Innenfläche (71) als Auflagerfläche ausgebildet ist.

## Claims

1. A forced steering device (1) for trailer hitches (9), with the forced steering device comprising a connecting element (2) for detachably fastening to a base plate (91) or the like of the trailer hitch (9) and a guide element (5) for connection with a tow bar or the like of a trailer, **characterized in that** the connecting element (2) comprises at least one side element (3), that a carrier element (4) for receiving the guide element (5) is provided and that apparatuses are provided for fastening the carrier element (4) in at least two different positions to the side element (3).

2. A forced steering device (1) according to claim 1, **characterized in that** the fastening of the carrier element (4) to the side element (3) is provided in at least three different distinguishable positions.

3. A forced steering device (1) according to claim 2, **characterized in that** the guide element (5) faces in a first position in a first direction, in a second position in a second direction opposite to the first direction, and arranged in a third direction so as to be twisted to the first position about a predeterminable angle (α).

4. A forced steering device (1) according to claim 3, **characterized in that** the angle (α) is in the range of approximately 10° to approximately 30°, especially in the range of approximately 15° to approximately 25°.

5. A forced steering device (1) according to claim 3 or 4, **characterized in that** the carrier element (4) can be moved by reversing from the first position to the second position.

6. A forced steering device (1) according to one of the claims 1 to 5, **characterized in that** the carrier element (4) comprises lead-through bores (41) and can be connected with the side element (3) by means of fastening means, especially screws, which are received by the lead-through bores (41).

7. A forced steering device (1) according to one of the claims 1 to 6, **characterized in that** the side element (3) comprises a plurality of threaded holes (32) for connection with the carrier element (4) in the different positions.

8. A forced steering device (1) according to one of the claims 1 to 7, **characterized in that** the connecting element (2) comprises a fastening apparatus (21), with the fastening apparatus (21) being symmetrical with respect to a rotation of the connecting element (2) about substantially 180°, with the side element (3) being displaceable to an opposite side of the trailer hitch (9) during the rotation.

9. A forced steering device (1) according to one of the claims 1 to 8, **characterized in that** the two oppositely arranged side elements (3) are provided.

10. A forced steering device (1) according to one of the claims 1 to 9, **characterized in that** the side element (3) is connected in a permanent manner with the connecting element (2), especially welded.

11. A forced steering device (1) according to one of the claims 1 to 10, **characterized in that** the guide element (5) is arranged as a hitch ball (51).

12. A forced steering device (1) according to one of the claims 1 to 11, **characterized in that** the guide element (5) comprises at least one lubricating apparatus (52), especially a lubricating bore (53).

13. A hitch apparatus (8) with a forced steering device (1) according to one of the claims 1 to 12.

14. A hitch apparatus (8) according to claim 13, comprising a drawbar eye (7) for a forced steering device comprising a hitch ball (51), a drawbar eye shaft (78) and an inside surface (71) of the ball, with the inside surface (71) of the ball comprising a recess (72), **characterized in that** a substantially pin-like actuating element (73) which comprises a respective engagement region (74) on the inside surface (71) of the ball which can be brought into the recess (72) and that the longitudinal axis of the actuating element (73) lies outside of the plane of symmetry formed by the longitudinal axis of the drawbar eye shaft (78) and the center point of the inside surface (71) of the ball.

15. A hitch apparatus according to claim 14, **characterized in that** the longitudinal axis of the actuating element (73) encloses with the plane of symmetry an angle of at least 10°, preferably at least 45°, more preferably substantially 90°.

16. A hitch apparatus according to claim 14 or 15, **characterized in that** the recess (72) outside of the extension of the drawbar eye shaft (78) is arranged up to the center of the inside surface (71) of the ball.

17. A hitch apparatus according to one of the claims 14 to 16, **characterized in that** the entire inside surface (71) of the ball which can be distinguished from the recess (72) is arranged as a bearing surface.

## Revendications

1. Module de direction forcée (1) pour attaches de remorque (9), dans lequel le module de direction forcée comporte un élément de liaison (2) pour la fixation amovible à une plaque de base (91) ou similaire de l'attache de remorque (9) et un élément de guidage (5) pour la liaison avec une barre de guidage ou similaire d'une remorque, **caractérisé en ce que** l'élément de liaison (2) comprend au moins un élément latéral (3), **en ce qu'**il est prévu un élément portant (4) destiné à recevoir l'élément de guidage (5) et **en ce que** sont prévus des dispositifs de fixation (31) de l'élément portant (4) dans au moins deux positions différentes avec l'élément latéral (3).

2. Module de direction forcée (1) selon la revendication 1, **caractérisé en ce que** la fixation de l'élément portant (4) est prévue dans au moins trois positions différentes avec l'élément latéral (3).

3. Module de direction forcée (1) selon la revendication 2, **caractérisé en ce que** l'élément de guidage (5) est orienté dans une première direction dans une première position, dans une deuxième direction opposée à la première direction dans une deuxième position, et tourné dans une troisième position selon un angle (α) pouvant être prédéterminé par rapport à la première position.

4. Module de direction forcée (1) selon la revendication 3, **caractérisé en ce que** l'angle (α) est compris entre environ 10° et environ 30°, en particulier entre environ 15° et environ 25°.

5. Module de direction forcée (1) selon la revendication 3 ou 4, **caractérisé en ce que** l'élément portant (4) peut être déplacé par rotation de la première position à la deuxième position.

6. Module de direction forcée (1) selon l'une des revendications 1 à 5, **caractérisé en ce que** l'élément portant (4) comporte des alésages traversants (41) et peut être relié à l'élément latéral (3) au moyen de moyens de fixation, en particulier de vis, reçus dans les alésages traversants (41).

7. Module de direction forcée (1) selon l'une des revendications 1 à 6, **caractérisé en ce que** l'élément latéral (3) présente une pluralité de trous filetés (32) pour la liaison avec l'élément portant (4) dans les différentes positions.

8. Module de direction forcée (1) selon l'une des revendications 1 à 7, **caractérisé en ce que** l'élément de liaison (2) comprend un dispositif de fixation (21), lequel dispositif de fixation (21) est symétrique par rapport à une rotation de l'élément de liaison (2) de sensiblement 180°, l'élément latéral (3) pouvant être amené, lors de la rotation, sur un côté opposé de l'attache de remorque (9).

9. Module de direction forcée (1) selon l'une des revendications 1 à 8, **caractérisé en ce que** deux éléments latéraux (3) disposés l'un en face de l'autre sont prévus.

10. Module de direction forcée (1) selon l'une des revendications 1 à 9, **caractérisé en ce que** l'élément latéral (3) est relié de manière inamovible à l'élément de liaison (2), en particulier soudé.

11. Module de direction forcée (1) selon l'une des revendications 1 à 10, **caractérisé en ce que** l'élément de guidage (5) est conformé comme une boule d'attelage (51).

12. Module de direction forcée (1) selon l'une des revendications 1 à 11, **caractérisé en ce que** l'élément de guidage (5) présente au moins un dispositif de lubrification (52), en particulier un trou de lubrification (53).

13. Dispositif d'attelage (8) avec un module de direction forcée (1) selon l'une des revendications 1 à 12.

14. Dispositif d'attelage selon la revendication 13 avec un oeillet de traction (7) pour une direction forcée présentant une boule d'attelage (51) avec une barre d'oeillet de traction (78) et une surface intérieure sphérique (71), laquelle surface intérieure sphérique (71) présente une ouverture (72), **caractérisé en ce qu'**un élément d'actionnement (73) sensiblement en forme de goupille, qui présente une zone d'engagement (74) correspondant à la surface intérieure sphérique (71), peut être introduit dans l'ouverture (72) et **en ce que** l'axe longitudinal de l'élément d'actionnement (73) se trouve en dehors du plan de symétrie formé par l'axe longitudinal de la barre d'oeillet de traction (78) et le centre de la surface intérieure sphérique (71).

15. Dispositif d'attelage selon la revendication 14, **caractérisé en ce que** l'axe longitudinal de l'élément d'actionnement (73) forme avec l'axe de symétrie un angle d'au moins 10°, de préférence d'au moins 45°, en particulier de sensiblement 90°.

16. Dispositif d'attelage selon la revendication 14 ou 15, **caractérisé en ce que** l'ouverture (72) est disposée en dehors du prolongement de la barre d'oeillet de traction (78) jusqu'au centre de la surface intérieure sphérique (71).

17. Dispositif d'attelage selon l'une des revendications 14 à 16, **caractérisé en ce que** toute la surface intérieure sphérique (71) pouvant être distinguée de l'ouverture (72) est conçue comme une surface d'appui.
